# EUROPEAN PATENT SPECIFICATION

(11) **EP 1 987 965 B1**
(45) Date of publication and mention of the grant of the patent: **22.12.2010**
(21) Application number: 08155281.2
(22) Date of filing: 28.04.2008
(51) Int. Cl.: B60C 11/13, B60C 11/04

(54) **Pneumatic tire**
Luftreifen
Pneu

(30) Priority: 03.05.2007 US 799878
(43) Date of publication of application: 05.11.2008
(73) Proprietor: The Goodyear Tire & Rubber Company, Akron, OH 44316-0001 (US)
(72) Inventor: Morrison, Andrew Edward, Akron, OH 44301 (US); Renner, Leyla Kristen, North Canton, OH 44720 (US); Kantura III, John Joseph, Hiram, OH 44234 (US); Maxwell, Paul Bryan, Kent, OH 44240 (US); Shondel, Jonathan James, Massillon, OH 44646 (US)
(74) Representative: Kutsch, Bernd

(56) References cited:
- EP-A- 1 410 927
- EP-A- 1 535 760
- JP-A- 6 312 603
- JP-A- 9 039 515
- JP-A- 2003 146 024
- JP-A- 2006 027 498
- US-A1- 2003 102 064
- US-A1- 2006 042 738

## Description

### Field of the Invention

The present invention is directed to a pneumatic tire. More specifically, the present invention is directed to a pneumatic tire with improved water and traction characteristics.

### Background of the Invention

In a conventional tire for typical use as on a passenger car or light truck, the tire tread is provided with a series of grooves, either circumferentially or laterally extending, or a combination of both, to form a plurality of blocks.

The goals of a tire during winter driving condition are to maintain good contact with the road, while providing for enhanced traction. However, since enhanced traction is best achieved by providing most biting edges to the tread pattern, while road contact is achieved by providing more surface area for tread contact, these goals are often conflicting.

JP-A- 09-039515 describes a tire comprising tread elements comprising a chamfer wherein the chamfer comprises an inclined radially outer surface and at least one traction element on the radially outer surface extending radially inward or outward of the outer chamfer surface.

### Summary of the Invention

The present invention is directed to a tire with a tread designed for achieving the goals of enhanced traction with excellent wet performance according to claim 1.

Dependent claims refer to preferred embodiments of the invention.

In one aspect of the invention, the chamfer has at least two to six indentations, preferably three or four indentations, in the radially outer surface of the chamfer.

The indentations are preferably equally spaced along the radially outer surface of the chamfer.

In another aspect of the invention, the indentation has a curved base, the base having a radius of curvature in the range of 0.5 to 2.0 mm.

In another aspect of the invention, the indentation has a polygonal configuration of at least two sides, preferably at least three sides.

In another aspect of the invention, the chamfer has a radially innermost termination point, the termination point located at a radial height in the range of zero to 70%, alternatively 20% to 50%, of the tread block height.

### Brief Description of the Drawings

The invention will be described by way of example and with reference to the accompanying drawings in which:
FIG. 1 illustrates a tire having a tread in accordance with the present invention;

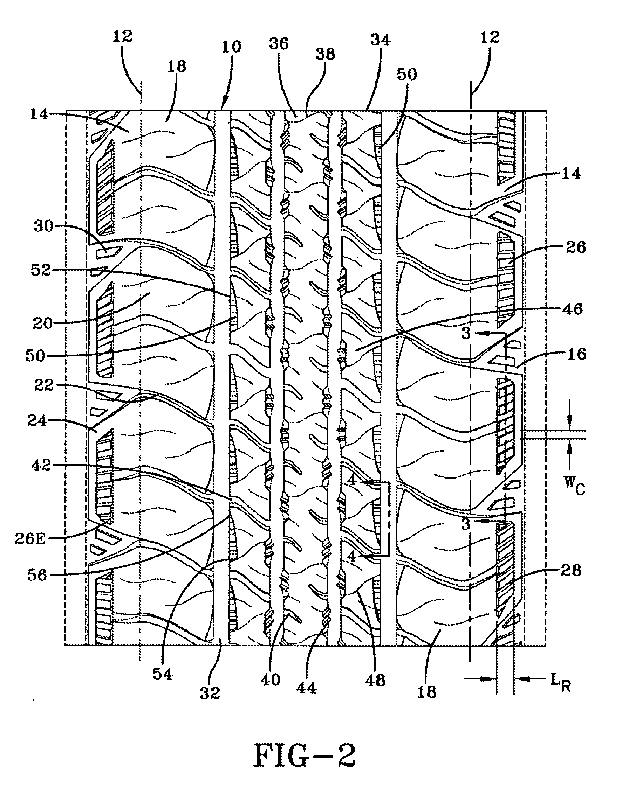

FIG. 2 is front plane view of the tire tread and upper shoulders of a tire;
FIG. 3 is cross-sectional view along line 3-3 of FIG. 2, showing the upper shoulder tire area;
FIG. 4 is a cross-sectional view along line 4-4 of FIG. 2, showing the lateral side of the intermediate tread blocks; and
FIGS. 5A-5G are different embodiments of indentations on the block chamfer.

### Detailed Description of the Invention

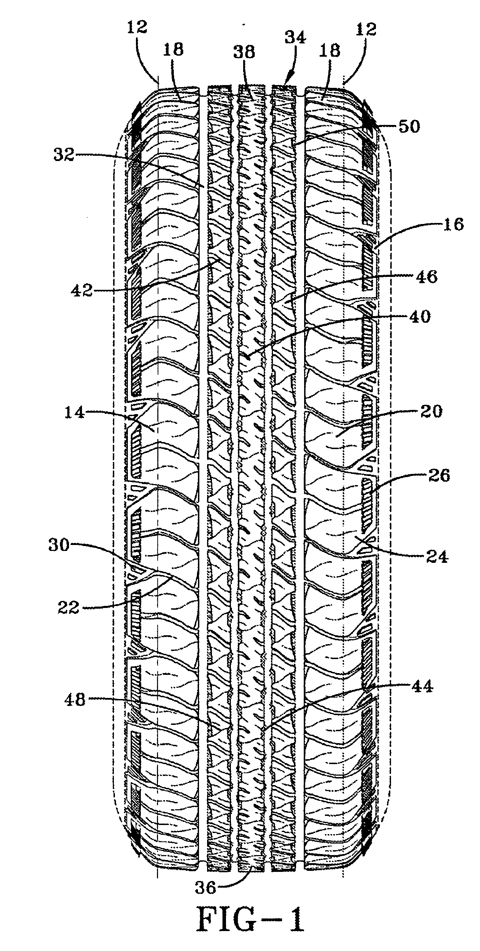

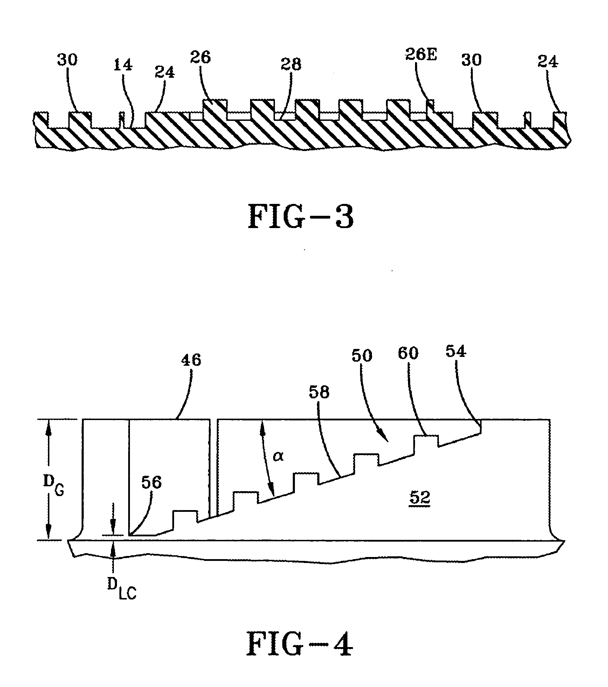

FIG. 1 is a tire with a tread and shoulders in accordance with the present invention. The tire has a tread 10 located between a pair of opposing tread edges 12; axially outward of the tread edges 12 are the opposing tire shoulders 14. The shoulders 14 extend into and merge with the tire sidewalls 16. The illustrated tread 10 is intended for use on a passenger vehicle tire or a light truck tire, but features in the tread may be used individually or collectively for these or other types of tires. The tread 10 has a pair of opposing outer tread rows 18, each outer tread row having circumferentially adjacent blocks 20 separated by lateral grooves 22. Pairs of circumferentially adjacent blocks 20 are associated together by means of an upper shoulder extension 24. Each upper shoulder extension 24 has a raised height over the shoulder 14 of the tire, creating tread-like elements in the upper shoulder, see also FIG. 3.

Located within each upper shoulder extension 24 is a set of raised ribs. The individual ribs 26 extend in an axial direction relative to the axis of rotation of the tire so that the width W_{C} of the rib 26 in the tire circumferential direction is less than the length L_{R} of the rib 26 in the tire radial direction. Due to their position in the upper shoulder extension, the ribs in the set of ribs 24 also extend to some extend in the radial direction of the tire. The length L_{R} of the ribs 26 within the set may vary; in the illustrated set, the end ribs 26E are shorter relative to the remaining ribs 26. The raised ribs 26 have a height, above the surface of the upper sidewall extension, of at least one quarter of the height of the upper sidewall extension, or as measured from the surface of the upper sidewall extension to the outer surface of the rib, the ribs have a height of 2.0 to 20 mm, or 2.0 to 15 mm, or 3 to 10 mm. To provide more tread surface to assist in traction, the spacing 28 between the ribs 26 may be recessed or have a negative depth relative to the surface of the upper sidewall extension 24. The illustrated recessed depth between the ribs is approximately equal to the depth of the lateral grooves 22 in the outer tread rows 18, thought the recessed depth may vary and be greater or less than the lateral groove depth.

Each set of raised ribs 26 in a single shoulder extension 24 has at least 3 raised ribs 26 but not more than ten ribs 26. All of the ribs 26 in the set of ribs are preferably inclined at the same angle in the range of 0°to 20°, alternatively 5° to 20°, such as 5° to 15°, in either direction relative to the radial direction relative to the axis of rotation of the tire. The ribs 26 create additional traction characteristics for the tire shoulder 14.

Located between the shoulder extensions 24, and within an extension of some of the lateral grooves 22 of the outer tread rows, there is preferably a second set of raised ribs 30. This second set of raised ribs 30 may be formed with some features identical to the first set of ribs 26, i.e., having the same number of ribs, the same radial length, the same height, or the same inclination direction. In the illustrated second set of ribs 30, there are two ribs 30 in each set, however there may also be 3 to 5 ribs 30. The ribs 30 within the set are parallel to one another, and are inclined at an angle in the range of 0°to 20°, alternatively 5 ° to 20°, such as 5 ° to 15°, relative to the axial direction, but preferably in a direction opposite of the ribs 26 in the first set of raised ribs 26. The ribs 30 in the second set have a length in the tire axial direction greater than the width in the tire circumferential direction. The illustrated ribs 30 have different lengths in the axial direction; for these ribs, the rib length is determined so that a desired spacing is maintained between the upper edge of the ribs and the adjacent shoulder extension 24. Due to their position in the upper shoulder extension, the ribs in the set of ribs 24 also extend to some extend in the radial direction of the tire.

In the central portion of the tread 10, the tire tread has four circumferential grooves 32, the grooves 32 delineating the shoulder rows 18, two intermediate tread rows 34, and a center tread row 36. The illustrated circumferential grooves 32 have an essentially straight configuration, this essentially straight configuration defined as being able to draw a line parallel to the tire equatorial plane through the center of the groove without the drawn line contacting the sides of any of the tread elements.

The center tread row 36 is a continuous rib having a plurality of sipes 38 extending between the circumferential grooves 32, creating a block-type appearance. However, as the sipes 38 close upon ground contact, the characteristics of a central tread rib are maintained. The quasi-block created between circumferentially adjacent sipes has at least one blind groove 40 on each lateral side of the quasi-block. The blind grooves 40 are substantially aligned with the lateral grooves 42 in the intermediate tread rows 34.

Along each lateral side of the quasi-block are traction divots 44. A traction divot 44 is a negative space created in the tread element, similar to a groove, but of a very limited extent into the tread element. The divots 44 have an axial extent into the quasi-blocks of not more than 20% of the quasi-block width, preferably 5% to 15%, as measured perpendicular to the tire equatorial plane. On each lateral side of the quasi-block there is at least one, but not more than ten traction divots 44, alternatively two to five divots 44; illustrated are three divots 44. The traction divots 44 have a depth extending the full height of the tread groove depth. To maintain a uni-directional tread configuration, the traction divots 44 on each lateral side of the tread are inverse mirror-images of each other.

The intermediate tread rows 34 are a plurality of tread blocks 46 separated by the inclined lateral grooves 42. Each block 46 is divided by a sipe 48 extending between the circumferential grooves 32. On the axially inner side of each block, relative to the tire centerplane, are traction divots 44. On the axially outer side of each block, relative to the equatorial plane, and within the boundaries of the block, is a toothed chamfer 50 extending in the circumferential direction. The boundaries of the block 46 are defined by the adjacent grooves 32, 42 and the intersection of the block walls and the grooves. For the illustrated tire, the lateral boundaries of the block 46 are defined by the straight circumferential grooves and the block walls 52, creating lateral boundaries parallel to the tire centerplane. When the tread 10 and chamfer 50 are viewed from above, the axially inner edge of the chamfer 50 is curved into the tread block 46 while the axially outer edge of the chamfer 50 is aligned with the non-chamfered portion of the tread block. This results in the chamfer 50 being fully within the boundaries of the tread block 46.

Each chamfer 50 has an initiation point 54 and a termination point 56. The initiation point 54 is the radially outermost point of the chamfer 50 and may be coincident with the tread surface. The termination point 56 is the radially innermost point of the chamfer 50 and may be located at any radial height D_{LC} in the range of zero to 70%, alternatively 10% to 60%, such as 20% to 50%, of the tread block height D_{G}, see FIG. 4.

The chamfer 50 has a radially outer surface 58 that extends from the initiation point 54 and the termination point 56. As the termination point 56 is below the initial tread surface, the chamfer radially outer surface 58 is either inclined or sloped downward. The chamfer 50 has at least one traction element 60 in the radially outer surface 58, see FIG. 4. The traction element 60 may be raised or indented from the inclined or sloped radially outer chamfer surface 58. The traction element 60 creates additional edges to the chamfer 50 and tread block 46, increasing the traction properties of the tire in both mud and snow conditions.

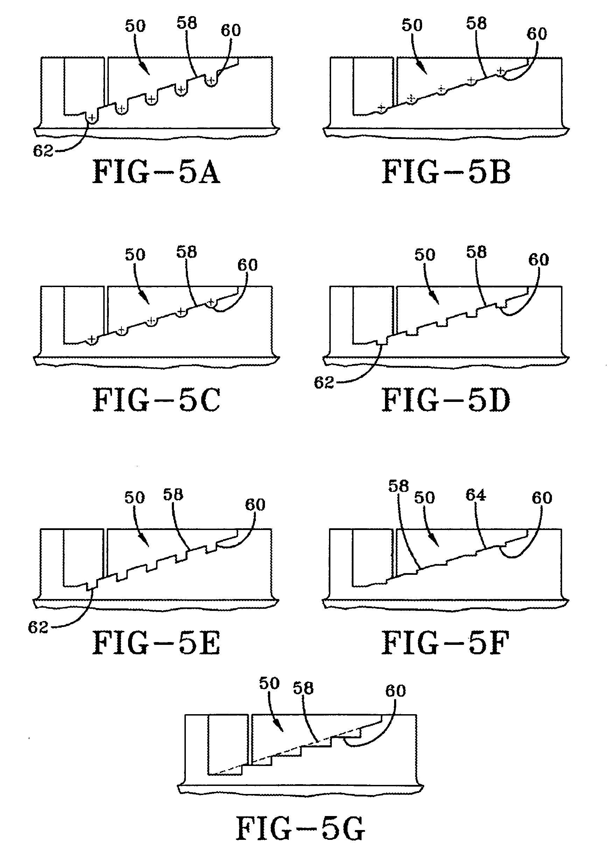

The traction element 60 may have a curved or polygonal configuration, see FIGS. 5A - 5G. When the element 60 is a curved indentation, the base of the indentation is defined by an arc. The arc has a radius center (+) located below, level with, or above the inclined radially outer surface 58 of the chamfer 50. When the radius center is located below the inclined surface 58, the base 62 of the indentation has a small curvature and the sides of the indentation are generally straighter than the base, see FIG. 5A. When the radius center is located above the inclined surface 58, the indentation will generally be shallow and have a fully curved configuration, see FIG. 5B. When the radius center is level with the inclined surface, the entire indentation will generally be curved, see FIG. 5C. FIGS. 5D-5F illustrates variations of the indentation with polygonal configurations. When the indentation 60 is square, the base 62 may be inclined to (FIG. 5D) or parallel with (FIG. 5E) the radially outer inclined chamfer surface 58. The indentations 60 of FIG. 5F may be considered triangular. When the indentations 60 are triangular and spaced from one another, small inclined teeth 64 are formed, FIG. 5F. When the indentations 60 are triangular and tangent to one another, the entire radially outer surface 58 of the chamfer 50 obtains a stepdown appearance, and the inclination angle of the outer surface 58 of the chamfer 50 is determined along the tips of the triangular steps, FIG. 5G.

The biting chamfer 50 provides the tire with additional traction elements without any reduction in water flow through the circumferential or lateral grooves as the chamfers do not extend into any of the tread grooves. If the traction elements are located along the entire length of the inclined surface of the chamfer, the traction benefits provided by the indentations are present for a majority of useful life of the tire tread.

## Claims

1. A pneumatic tire, the tire comprising a ground contacting tread portion (10), the tread portion comprising at least one straight circumferentially extending groove (32), the groove (32) defining one lateral side and lateral boundary of a plurality of tread elements (46), wherein at least one tread element (46) has a chamfer (50) within the tread element and inward of the lateral boundary of the tread element, the chamfer (50) extending in the circumferential direction of the tire, the chamfer (50) having an inclined radially outer surface, and the chamfer further comprising at least one extending traction element (60) on the radially outer surface, the traction element (60) extending radially inward or outward of the radially outer surface of the chamfer (50), **characterized in that** the inclined radially outer surface of the chamfer (50) is inclined circumferentially at an angle of 15° to 60° relative to the tread surface.

2. The tire of claim 1 wherein the chamfer (50) has two to six traction elements (60) in the radially outer surface of the chamfer (50).

3. The tire of claim 1 or 2 wherein the traction elements (60) are equally spaced along the radially outer surface of the chamfer (50).

4. The tire of at least one of the previous claims wherein the traction element (60) extends radially inward of the radially outer surface of the chamfer (50) and has a curved base (62), the base (62) having a radius of curvature in the range of 0.5 to 2.0 mm.

5. The tire of claim 4 wherein the center of the radius of curvature is radially inward of the inclined radially outer surface of the chamfer (50).

6. The tire of claim 4 wherein the center of the radius of curvature is radially outward of the inclined radially outer surface of the chamfer (50).

7. The tire of at least one of the previous claims wherein the traction element (60) has a polygonal configuration of at least two sides.

8. The tire of at least one of the previous claims wherein the circumferentially extending axially inward edge of the chamfer (50), relative to the tread element lateral boundary, is curved.

9. The tire of at least one of the previous claims wherein the chamfer (50) has a radially innermost termination point (54), the termination point being located at a radial height in the range of zero to 70% of the tread block height.

## Patentansprüche

1. Luftreifen, wobei der Reifen einen mit dem Boden in Kontakt kommenden Laufflächenteil (10) umfasst, wobei der Laufflächenteil mindestens eine gerade, sich in Umfangsrichtung erstreckende Rille (32) umfasst, wobei die Rille (32) eine seitliche Seite und seitliche Abgrenzung einer Vielzahl von Profilelementen (46) definiert, wobei mindestens ein Profilelement (46) eine Abfasung (50) innerhalb des Profilelements und einwärts von der seitlichen Abgrenzung des Profilelements aufweist, wobei die Abfasung (50) sich in der Umfangsrichtung des Reifens erstreckt, wobei die Abfasung (50) eine geneigte radial äußere Fläche aufweist, und wobei die Abfasung weiter mindestens ein sich erstreckendes Traktionselement (60) an der radial äußeren Fläche umfasst, wobei das Traktionselement (60) sich radial einwärts oder auswärts von der radial äußeren Fläche der Abfasung (50) erstreckt, **dadurch gekennzeichnet, dass** die geneigte radial äußere Fläche der Abfasung (50) in Umfangsrichtung in einem Winkel von 15° bis 60° bezüglich der Laufflächenoberfläche geneigt ist.

2. Reifen nach Anspruch 1, wobei die Abfasung (50) zwei bis sechs Traktionselemente (60) in der radial äußeren Fläche der Abfasung (50) aufweist.

3. Reifen nach Anspruch 1 oder 2, wobei die Traktionselemente (60) entlang der radial äußeren Fläche der Abfasung (50) abstandsgleich angeordnet sind.

4. Reifen nach mindestens einem der vorgenannten Ansprüche, wobei das Traktionselement (60) sich radial einwärts von der radial äußeren Fläche der Abfasung (50) erstreckt und eine gekrümmte Basis (62) aufweist, wobei die Basis (62) einen Krümmungsradius im Bereich von 0,5 bis 2,0 mm hat.

5. Reifen nach Anspruch 4, wobei der Mittelpunkt des Krümmungsradius sich radial einwärts von der geneigten radial äußeren Fläche der Abfasung (50) befindet.

6. Reifen nach Anspruch 4, wobei der Mittelpunkt des Krümmungsradius sich radial auswärts von der geneigten radial äußeren Fläche der Abfasung (50) befindet.

7. Reifen nach mindestens einem der vorgenannten Ansprüche, wobei das Traktionselement (60) eine Vieleckkonfiguration von mindestens zwei Seiten hat.

8. Reifen nach mindestens einem der vorgenannten Ansprüche, wobei die sich in Umfangsrichtung erstreckende, axial einwärts befindliche Kante der Abfasung (50) bezüglich der seitlichen Abgrenzung des Profilelements gekrümmt ist.

9. Reifen nach mindestens einem der vorgenannten Ansprüche, wobei die Abfasung (50) einen radial innersten Endpunkt (54) aufweist, wobei der Endpunkt sich auf einer radialen Höhe im Bereich von Null bis 70% der Profilblockhöhe befindet.

## Revendications

1. Bandage pneumatique, le bandage pneumatique comprenant une portion de bande de roulement (10) entrant en contact avec le sol, la portion de bande de roulement comprenant au moins une rainure droite (32) s'étendant en direction circonférentielle, la rainure (32) définissant un côté latéral et une limite latérale de plusieurs éléments de bande de roulement (46), au moins un élément de bande de roulement (46) possédant un chanfrein au sein de l'élément de bande de roulement et en deçà de la limite latérale de l'élément de bande de roulement, le chanfrein (50) s'étendant dans la direction circonférentielle du bandage pneumatique, le chanfrein (50) possédant une surface externe inclinée en direction radiale et le chanfrein comprenant en outre au moins un élément de traction (60) s'étendant sur la surface externe en direction radiale, l'élément de traction (60) s'étendant en direction radiale à l'intérieur ou à l'extérieur de la surface externe du chanfrein (50), en direction radiale, **caractérisé en ce que** la surface externe du chanfrein (50), inclinée en direction radiale, est inclinée en direction circonférentielle en formant un angle de 15° à 60° par rapport à la surface de la bande de roulement.

2. Bandage pneumatique selon la revendication 1, dans lequel le chanfrein (50) possède de deux à six éléments de traction (60) dans la surface externe du chanfrein (50), en direction radiale.

3. Bandage pneumatique selon la revendication 1 ou 2, dans lequel les éléments de traction (60) sont disposés en position équidistante sur la surface externe du chanfrein (50), en direction radiale.

4. Bandage pneumatique selon au moins une des revendications précédentes, dans lequel l'élément de traction (60) s'étend en direction radiale à l'intérieur de la surface externe du chanfrein (50), en direction radiale, et possède une base courbe (62), la base (62) possédant un rayon de courbure dans la plage de 0,5 à 2,0 mm.

5. Bandage pneumatique selon la revendication 4, dans lequel le rayon de courbure est interne en direction radiale à la surface externe du chanfrein (50) inclinée en direction radiale.

6. Bandage pneumatique selon la revendication 4, dans lequel le rayon de courbure est externe en direction radiale à la surface externe du chanfrein (50) inclinée en direction radiale.

7. Bandage pneumatique selon au moins une des revendications précédentes, dans lequel l'élément de traction (60) possède une configuration polygonale d'au moins deux côtés.

8. Bandage pneumatique selon au moins une des revendications précédentes, dans lequel le bord interne en direction axiale du chanfrein (50), s'étendant en direction circonférentielle, est courbe par rapport à la limite latérale de l'élément de bande de roulement.

9. Bandage pneumatique selon au moins une des revendications précédentes, dans lequel le chanfrein (50) possède un point de terminaison (54) le plus interne en direction radiale, le point de terminaison étant situé à une hauteur radiale à la plage de zéro à 70 % de la hauteur du pavé.
